# EUROPEAN PATENT APPLICATION

(11) **EP 2 472 874 A2**
(43) Date of publication of application: **04.07.2012**
(21) Application number: 11193844.5
(22) Date of filing: 15.12.2011
(51) Int. Cl.: H04N 9/31

(54) **Seamless mosaic projection system and method of aligning the same**

(30) Priority: 29.12.2010 US 980705
(71) Applicant: Delphi Technologies, Inc., Troy, MI 48007 (US)
(72) Inventor: Sultan, Michel F., Troy, MI Michigan 48098 (US); Harbach, Andrew P., Argyle, TX Texas 76226 (US); Kuhlman, Frederick F., Kokomo, IN Indiana 46902 (US)
(74) Representative: Denton, Michael John

(57) **Abstract**

A display system (10) for displaying a seamless mosaic of a plurality of images projected by a plurality of projectors (12) by aligning the images projected so the mosaic appears seamless. The display system (10) includes a display (16) defining a display surface (14), a first projector (12A), and a second projector (12B) configured to project onto distinct areas that partially overlap. A light detector (30) located adjacent to the display surface (14) detects light projected onto the overlap area. Image signals received by the projectors (12) are adjusted to eliminate the overlap and or balance the brightness of each projected image so the composite image appears to be a seamless mosaic.

## Description

### TECHNICAL FIELD

The invention generally relates to system for displaying a seamless mosaic of a plurality of images projected by a plurality of projectors, and more particularly relates to a system and method for aligning the projectors so a mosaic of images on a display appears to be seamless.

### BACKGROUND OF INVENTION

Some large display systems use multiple projectors to display a mosaic of images. When the projectors are properly aligned, gaps between the images and overlaps of the images are not apparent and so the composite image appears seamless. As such, the mosaic of images may appear to be a single large image, and so the fact that the single large image is formed of multiple distinct images is not apparent to a person viewing the single large image. It has been suggested that smaller display systems, such as in-vehicle display systems or portable personal display systems may use a plurality of pico-projectors to project a plurality of images onto a display surface. In-vehicle use of such an arrangement may be particularly advantageous because of the desire for wide display aspect ratios for vehicle dash displays. However, when such a display system is assembled, and due to temperature variations and vibrations experienced by in-vehicle and portable displays, there is a need for an easy and economical way to align the projectors so the composite image appears seamless. It will be appreciated that the projectors may need to be aligned each time the vehicle is started, or when there is a significant change in temperature, or even on a continuous basis.

### SUMMARY OF THE INVENTION

In accordance with one embodiment of this invention, a display system for displaying a seamless mosaic of a plurality of images projected by a plurality of projectors is provided. The display system includes a display surface, a first projector, a second projector, a light detector, and a controller. The display surface is configured to display images projected onto the display surface. The first projector is configured to project a first image portion onto the display surface within a first display portion of the display surface. The first image portion is based on a first image signal. The second projector is configured to project a second image portion onto the display surface within a second display portion of the display surface distinct from the first display portion. The second image portion is based on a second image signal. The second image portion overlaps the first image portion to define a border portion common to the first image portion and the second image portion. The light detector is adjacent the display and is configured to detect light projected onto a location within the border portion by the first projector or by the second projector. The controller is configured to receive a light signal from the light detector and determine the first image signal and the second image signal based on the light signal so a seamless mosaic is displayed.

In another embodiment of the present invention, a controller for a display system displaying a seamless mosaic of a plurality of images projected onto a display surface by a plurality of projectors is provided. The system includes a display surface, a first projector configured to project light onto a border portion of the display, a second projector configured to project light onto the border portion, and a light detector attached to the display that is configured to detect light at a location within the border portion. The controller includes a first output, a second output, an input, and a processor. The first output is configured to provide a first image signal for the first projector. The second output is configured to provide a second image signal for the second projector. The input is configured to receive a light signal from the light detector. The processor is configured to analyze the light signal, and determine the first image signal and the second image signal based on the light signal so a seamless image is projected on the display.

In yet another embodiment of the present invention, a method to align a display system for displaying a seamless mosaic of a plurality of images projected onto a display surface by a plurality of projectors is provided. The system includes a display surface, a first projector configured to project onto a border portion of the display surface, a second projector configured to project onto the border portion, and a light detector attached to the display and configured to detect light at a location within the border portion. The method includes the steps of projecting a first image from a first projector onto the border portion, receiving a first light signal from the light sensor in response to projecting the first image, and determining a first position within the first image corresponding to the location of the light detector. The method also includes the steps of projecting a second image from a second projector onto the border portion; receiving a second light signal from the light sensor in response to projecting the second image, and determining a second position within the second image corresponding to the location of the light detector. The method also includes the step of adjusting the first image and the second image so a seamless mosaic is projected on the display.

Further features and advantages of the invention will appear more clearly on a reading of the following detailed description of the preferred embodiment of the invention, which is given by way of non-limiting example only and with reference to the accompanying drawings.

### BRIEF DESCRIPTION OF THE DRAWINGS

The present invention will now be described, by way of example with reference to the accompanying drawings, in which:

Fig. 1 is a cut-away perspective view of a vehicle interior equipped with a display system in accordance with one embodiment;

Fig. 2 is a perspective view of a display system in accordance with one embodiment of the display system shown in Fig. 1;

Fig. 3 is a diagram of a display system in accordance with one embodiment of the display system shown in Fig. 1; and

Fig. 4 is a sequence of exemplary images projected by a display system in accordance with one embodiment of the display system shown in Fig. 1

Fig. 5 is a flowchart of a method for operating a display system in accordance with one embodiment of the display system shown in Fig. 1.

### DESCRIPTION OF THE PREFERRED EMBODIMENTS

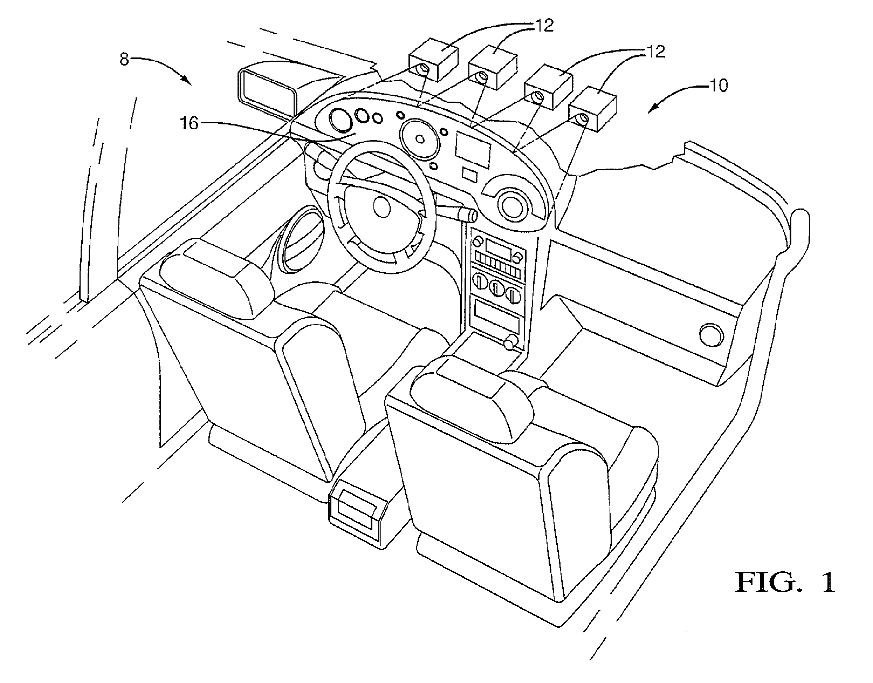

In accordance with an embodiment, Fig. 1 illustrates a non-limiting example of a vehicle interior 8 equipped with a display system 10 having wide aspect ratio, meaning that the image shown by display system 10 is much wider than it is high. One way to display an image having a wide aspect ratio is to use a plurality of projectors 12 to project distinct images onto a display 16, and align those projectors 12 so borders along adjacent images join are not apparent to a person viewing the composite image formed by the distinct images. It is understood in this non-limiting example that projectors 12 are installed within the dash and so the bodies of the projectors 12 are generally not seen by a person occupying the vehicle interior 8.

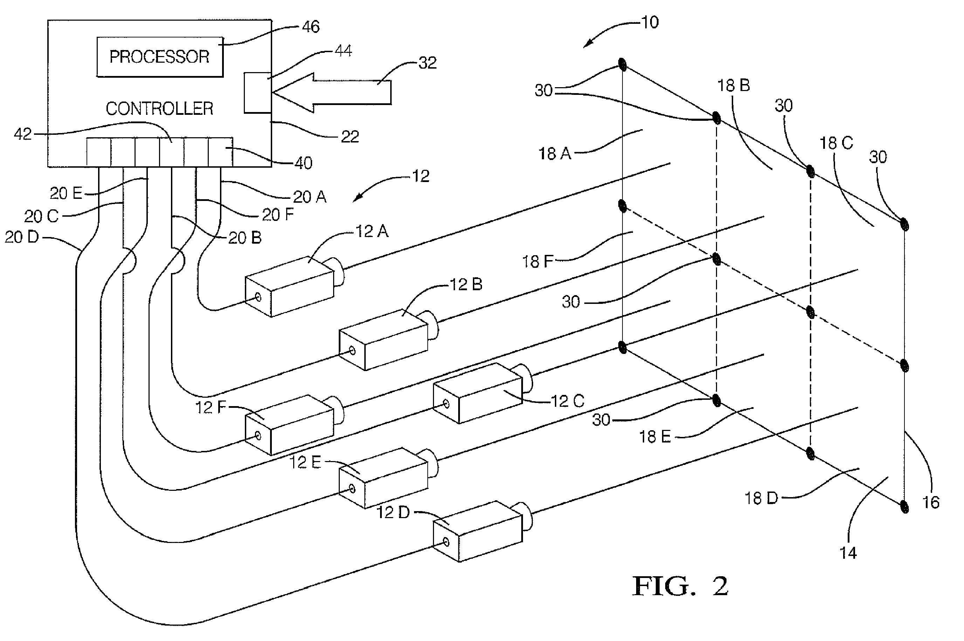

Fig. 2 illustrates a more generic non-limiting example of a display system 10 for displaying a seamless mosaic of a plurality of distinct images projected by a plurality of projectors 12 on a display surface 14 of a display 16. The display surface 14 may be a diffusing reflective surface such as a projection screen, and so the composite image is viewed from the same side of the display 16 as the projectors 12 are projecting the plurality of images upon the display surface 14. Alternatively, the display 16 may be formed of a diffusing translucent material such as frosted glass, and so the composite image may be viewed from the other side of the display 16, that is the side opposite the display surface 14.

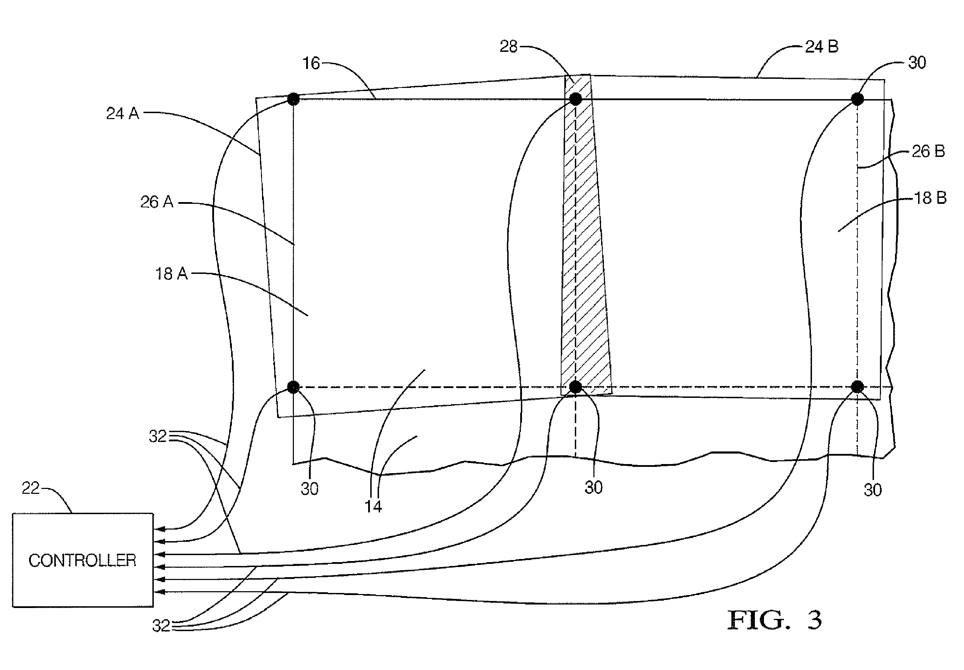

The plurality of projectors 12 may include a first projector 12A configured to project a first image portion 24A (Fig. 3) onto the display surface 14 within a first display portion 18A of the display surface 14. The first projector 12A is generally configured to be capable of projecting an image that covers the entire area within the first display portion 18A, plus a border extending a sufficient amount beyond the first display portion 18A. The sufficient amount beyond the first display portion 18A is determined by part-to-part manufacturing variability of the display system 10 such that the first projector 12A can always project a first image portion 24A that will always cover at least the first display portion 18A. With such an arrangement, an alignment process described in more detail below can be used to adjust a first image signal 20A received by the first projector 12A from a controller 22 so a first aligned image 26A (Fig. 3) is projected that fits the first display portion 18A. It should be understood that the first image portion 24A generally has the same content as the first aligned image 26A, but that the first aligned image 26A is an alteration of the first image portion 24A, where the alterations are directed to fitting the image into the first display portion 18A. The plurality of projectors 12 may also include a second projector 12B configured to project a second image portion 24B onto the display surface 14 within and possibly beyond a second display portion 18B of the display surface 14 distinct from the first display portion 18A. Likewise, the second image portion 24B is generally based on a second image signal 20B prior to the alignment process. It follows that the second image signal 20B may be adjusted by the controller 22 so a second aligned image 26B is projected that fits the second display portion 18B. As illustrated in this example, the first display portion 18A and the second display portion 18B are arranged along side each other so that if the first image portion 24A and the second image portion 24B are properly aligned to provide the first aligned image 26A and the second aligned image 26B respectively, they will appear to be part of a seamless mosaic or seamless composite image on the display 16. As used herein, a seamless mosaic is generally a composite image formed of a plurality of distinct images without an apparent gap between the discrete images, and without an apparent overlap of the discrete images. For example, a seamless mosaic would not have an apparent gap between the first aligned image 26A and the second aligned image 26B that could appear as a dark line between the first aligned image 26A and the second aligned image 26B. Also, a seamless mosaic would not have an apparent overlap of the first aligned image 26A and the second aligned image 26B that could appear as a brighter than desired or brighter than expected region along the border between the first aligned image 26A and the second aligned image 26B because the border was receiving light from both the first projector 12A and the second projector 12B.

Fig. 3 illustrates a close-up view of part of the display surface 14 that includes the first display portion 18A and the second display portion 18B. In this non-limiting, illustrative example, the second image portion 24B overlaps the first image portion 24A to define a border portion 28 common to the first image portion 24A and the second image portion 24B. While not specifically indicated, there are other border portions defined by overlapping of image portions from the projectors 12, as well as border portions along the perimeter of the display 16 that are outside of the display portions 18A-F and not in common with other image portions projected by the projectors 12, such as the area of the first image portion 24A above or left of the first display portion 18A.

The display system 10 may also include a light detector 30 adjacent to or attached to the display 16. As used herein, describing the light detector 30 as being adjacent to the display 16 means that the light detector 30 is positioned to detect light projected directly from one or more of the projectors 12, and specifically excludes detecting light reflected from the display surface 14 as would be the case for a camera viewing the display surface. The light detector 30 may be a photo-diode, or photo-transistor, or other light sensitive device suitable for detecting light. In one embodiment, the light detector 30 is configured to detect light projected onto a location within the border portion 28 by the first projector 12A or by the second projector 12B. The light detector 30 is preferably small enough that it is not readily noticed by a person viewing the display 16. It may be desirable that the light detector 30 be small enough to detect light projected from a single pixel, and not detect light projected by other pixels adjacent to the single pixel.

Fig. 3 illustrates the first display portion 18A has having four (4) light detectors at the corners of the first display portion 18A. It will be appreciated following the description of the alignment process below that if skewing of the first image portion 24A relative to the first display portion 18A did not occur as suggested by Fig. 3, then it may not be necessary to have light detectors at each corner. Absent skewing, a single light detector located anywhere on the line demarcating the first display portion 18A from the second display portion 18B would be sufficient for aligning the first image portion 24A with the second image portion 24B along the border portion 28. It is noted that Fig. 2 illustrates all the display portions 18A-F as being rectangular and the same size, but it is recognized that the display portions do not need to be rectangularly shaped, or even polygons, or be the same size or similarly shaped.

Continuing to refer to Fig. 2 and Fig. 3, the display system 10 may also include a controller 22 configured to receive a light signal 32 from the light detector 30 and determine the first image signal 20A and the second image signal 20B based on the light signal 32 so a seamless mosaic is projected on the display 16. In an embodiment, the controller 22 may be configured to adjust the first image signal 20A so the first image portion 24A is, in effect, transformed into the first aligned image 26A and so the projected image fits the first display portion 18A, thereby eliminating gaps and overlaps with respect to the second aligned image 26B. Adjusting the first image signal 20A so the image projected by the first projector 12A is the first aligned image 26A and therefore fits into the first display portion 18A may include using one or more of known image signal processing techniques to alter the height or width of the projected image, or alter the rotational orientation to correct the skewing of the first image portion 24A relative to the first display portion 18A as suggested in Fig. 3 The controller may also be configured to adjust the first image signal 20A and/or the second image signal 20B to alter a first image brightness of the first aligned image 26A relative to a second image brightness of the second aligned image 26B. Such a brightness adjustment may also be based the light signal 32 from the light detector 30.

In order to adjust the first image portion 24A to provide the first aligned image 26A, it may be desirable to determine a first position within the first image portion 24A that corresponds to the light detector 30. By way of a non-limiting example, if a particular pixel in the first projector 12A can be associated with the location of the light detector 30 at the bottom of the border portion 28, then a positional difference between the lower right corner of the first image portion 24A and the light detector 30 indicated may be determined and so the first image signal 20A can be adjusted so the first aligned image 26A is projected. It follows that the controller 22 may be configured to determine that light projected by the first projector 12A onto the location of the light detector 30 corresponds to a first position within the first image portion 24A, and that light projected by the second projector 12B onto the same location corresponds to a second position within the second image portion 24B.

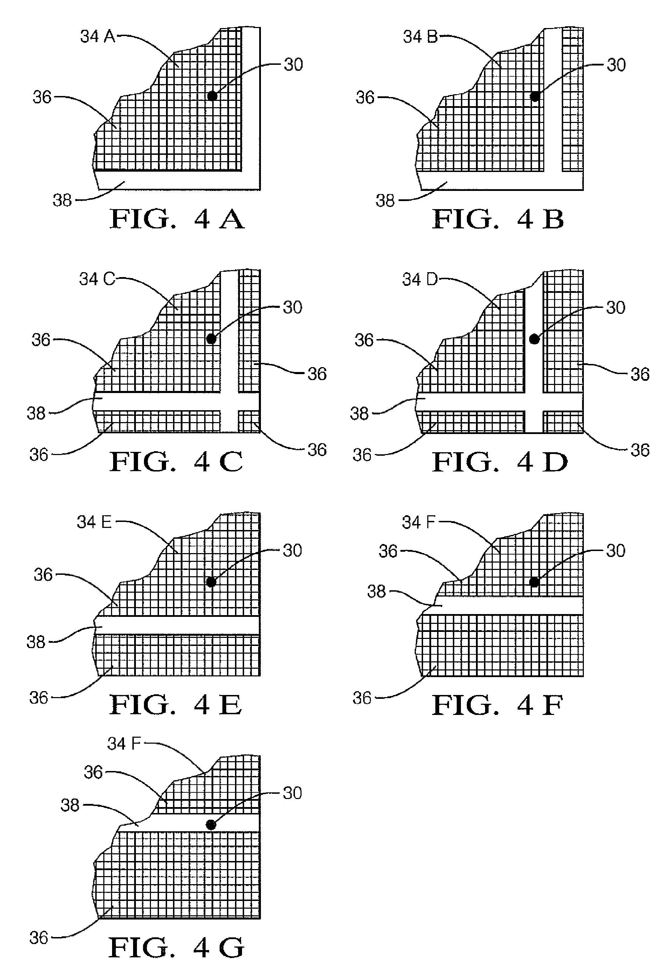

Fig. 4 illustrates a non-limiting sequence of images 34A-G projected by a projector that could be used to determine a light detector 30 position within the projected image and so, for example, associate particular pixel of a projector with a light detector 30 position within the image. The images 34A-G represent only a fraction of a projected image, for example, the lower right corner of the first image portion 24A. The images 34A-G include a deactivated region 36 illustrated as shaded indicating that the deactivated region 36 is not emitting or projecting light that could be detected by the light detector 30. The images 34A-G also include an activated region 38 indicating that a column and/or row of light is being emitted or projected that can be detected by the light detector 30.

The column and/or row of light may correspond to a column or row of pixels in the projector, and the column and or row may be from a single column or row of pixels, or multiple columns or rows of adjacent pixels. In the discussion below, it could be assumed that the columns and rows are a single pixel wide, but it is understood that this is a non-limiting example and that the teaching herein could be applied to columns and rows that are multiple pixels wide, even if the light detector is configured to detect light from a single pixel. Furthermore, it will be recognized that multiple distinct columns and/or rows of light could be projected to speed up the process of determining the position of the light detector 30, or that the process of determining the position of the light detector 30 may first determine a column location and then separately determine a row location, or that other non-rectangular patterns of deactivated region 36 and activated region 38 could be used to determine the location of the light detector 30.

Fig. 4A illustrates a first column and a first row of light forming an activated region 36 that does not illuminate the light detector 30 with light from either the first column or the first row. Fig. 4B illustrates that the activated column is stepped to a second column, but the light detector 30 is still not illuminated. Fig. 4C illustrates that the activated row is stepped to a second row, but the light detector 30 is still not illuminated. Fig. 4D illustrates that the activated column is again stepped to a third column, and now the light detector 30 is illuminated by the third column of light. Since for this example it is now known that light detector 30 is somewhere in the third column, subsequent images are directed at determining the row position that corresponds to the position of the light detector 30. Fig. 4E to 4G illustrate how the activated row is stepped until as illustrated in Fig. 4G, the light detector 30 is illuminated and so the column and row position of the light detector in the first image portion 24A is now known. It follows that controller 22 may be configured to output a first image signal 20A that sequentially activates columns of pixels and rows of pixels until the light signal indicates that light is detected by the light detector and thereby indicates a first column or a first row that corresponds to the first position.

Referring again to Fig. 2 and Fig. 3, the controller 22 is generally configured for displaying a seamless mosaic of a plurality of images, for example a first aligned image 26A and a second aligned image 26B, projected onto a display surface 14 by a plurality of projectors 12. The controller 22 may include a first output 40 configured to provide a first image signal 20A to the first projector 12A, and a second output 42 configured to provide a second image signal 20B to the second projector 12B. The controller 22 may further include an input 44 configured to receive a light signal 32 from the light detector 30. The controller 22 may also include a processor 46 such as a microprocessor or other control circuitry as should be evident to those in the art. The controller 22 may include memory, including non-volatile memory, such as electrically erasable programmable read-only memory (EEPROM) for storing one or more routines, thresholds and captured data. The one or more routines may be executed by the processor 46 to perform steps for determining the first image signal 20A and the second image signal 20B as described herein. In particular, the processor 46 may be configured to analyze the light signal 32, and determine the first image signal 20A and the second image signal 20B based on the light signal 32 so a seamless image is projected on the display 16.

In addition to using the light detector 30 to alter or balance the brightness of one image relative to an adjacent image, the light detector 30 may also be used to color match or color balance the images by illuminating the various colors sequentially. By way of example, and not limitation, the system 10 may turn on the Red sub-pixels of one projector and turn off the Green and Blue sub-pixels to measure the intensity of red light using the same light detector 30 used for aligning the images. This process would be repeated for the Green and Blue sub-pixels for all projectors capable of illuminating the light detector 30.

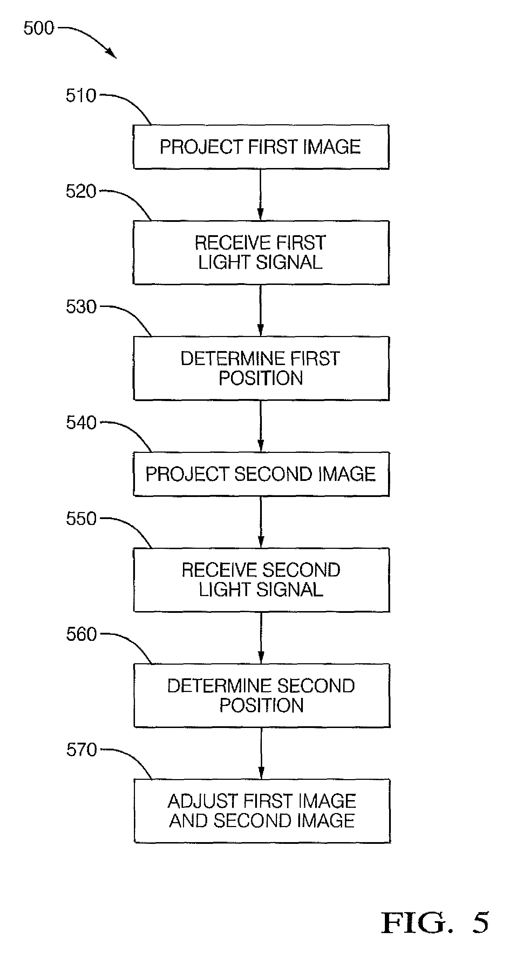

Fig. 5 illustrates a method 500 to align or calibrate a display system 10 for displaying a seamless mosaic of a plurality of images, for example a first aligned image 26A and a second aligned image 26B. The images are projected onto a display surface 14 of a display 16 by a plurality of projectors 12 that include a first projector 12A configured to project onto a border portion 28 of the display surface 14, a second projector 12B configured to project onto the border portion 28. The display system 10 also includes a light detector 30 adjacent and possible attached to the display 16. The light detector 30 is generally configured to detect light at a location within the border portion 28. The method 500 includes steps directed to calibrating the display system 10 so that the images projected by the projectors are aligned such that the mosaic is seamless.

Step 510, PROJECT FIRST IMAGE, may include projecting a first image, for example projecting a first image portion 24A from a first projector 12A onto the border portion 28. Projecting the first image may also include sequentially activating columns of pixels and and/or rows of pixels as describe above with regard to Fig. 4.

Step 520, RECEIVE FIRST LIGHT SIGNAL, may include receiving a first light signal from the light detector 30 in response to projecting the first image.

Step 530, DETERMINE FIRST POSITION, may include determining a first position within the first image corresponding to the location of the light detector 30. For example, it follows that sequentially activating columns and/or rows of pixels may be continued until the light signal 32 indicates that light is detected by the light detector 30. When light is detected, it may be an indication that a particular column or row corresponds to the first position.

Step 540, PROJECT SECOND IMAGE, may include projecting a second image, for example the second image portion 24B from the second projector 12B onto the border portion 28. As suggested with regard to Step 510 above, projecting the second image may also include sequentially activating columns of pixels and and/or rows of pixels.

Step 550, RECEIVE SECOND LIGHT SIGNAL, may include receiving a second light signal from the light detector 30 in response to projecting the second image.

Step 560, may include determining a second position within the second image corresponding to the location of the light detector 30, possibly in a manner similar to that described with regard to step 530.

Step 570, ADJUST FIRST IMAGE AND SECOND IMAGE, may include adjusting the first image and the second image so a seamless mosaic is projected on the display. Adjusting the images may include the controller 22 adjusting the first image signal 20A and/or the second image signal 20B so first image and the second image do not overlap. In one embodiment, eliminating overlap may include deactivating pixels in the first projector 12A and/or the second projector 12B so that at any point within the border portion 28 is not receiving light from both projectors. Alternatively, the projectors may be equipped to alter the size and direction of the image projected by adjusting a lens arrangement and or adjusting a projection direction of the projector.

Accordingly, a display system 10, a controller 22 for the display system 10, and a method 500 for displaying a seamless mosaic of a plurality of images projected by a plurality of projectors is provided. Locating light detectors adjacent to or attached to a display surface allows the images projected by the projectors to be aligned without the added complexity of using a camera to view the display for alignment purposes. Also, for wide displays that do not have adequate depth for a camera to view the display, using discrete light detectors adjacent the display surface is particularly advantageous. By equipping the display system to self-calibrate, dimensional changes of the display system caused by, for example, vibration and/or changes in temperature can be corrected without the display system user having to re-align the display system by, for example, taking the display system to a service center equipped to re-align the display system.

## Claims

**1.** A display system (10) for displaying a seamless mosaic of a plurality of images projected by a plurality of projectors (12A-F), said system (10) comprising:
a display (16) defining a display surface (14) and configured to display images projected onto the display surface (14);
at least a first projector (12A) configured to project a first image portion (24A) onto the display surface (14) within a first display portion (18A) of the display surface (14), wherein the first image portion (24A) is based on a first image signal (20A);
at least a second projector (12B) configured to project a second image portion (24B) onto the display surface (14) within a second display portion (18B) of the display surface (14) distinct from the first display portion (18A), wherein the second image portion (24B) is based on a second image signal (20B), and wherein the second image portion (24B) overlaps the first image portion (24A) to define a border portion (28) common to the first image portion (24A) and the second image portion (24B);
a light detector (30) adjacent the display (16), said light detector (30) configured to detect light projected onto a location within the border portion (28) by the first projector (12A) or by the second projector (12B); and
a controller (22) configured to receive a light signal (32) from the light detector (30) and determine the first image signal (20A) and the second image signal (20B) based on the light signal (32) and wherein the controller (22) is further configured to adjust the first and second image signals so a seamless mosaic is displayed

**2.** The system (10) in accordance with claim 1 where said light detector (30) is sized to detect light projected from a single pixel, and not detect light projected by other pixels adjacent to the single pixel.

**3.** The system (10) in accordance with claim 1 and 2, wherein the controller (22) is further configured to alter a second image brightness relative to a first image brightness.

**4.** The system (10) in accordance with claim 1 and 2, wherein the controller (22) is further configured to determine that light projected by the at least first projector (12A) onto the location corresponds to a first position within the first image portion (24A), and light projected by the at least second projector (12B) onto the location corresponds to a second position within the second image portion (24B).

**5.** The system (10) in accordance with claim 4, wherein the controller (22) is further configured to output a first image signal (20A) that sequentially activates columns of pixels until the light signal (32) indicates that light from the at least first projector (12A) is detected by the light detector (30) and thereby indicates a first pixel column of the first projector (12A) that corresponds to the first position.

**6.** The system (10) in accordance with claim 4, wherein the controller (22) is further configured to output a first image signal (20A) that sequentially activates rows of pixels until the light signal (32) indicates that light from the first projector (12A) is detected by the light detector (30) and thereby indicates a first pixel row of the first projector (12A) that corresponds to the first position.

**7.** The system (10) in accordance with claim 4, wherein the controller (22) is further configured to output a first image signal (20A) that sequentially activates columns of pixels and rows of pixels until the light signal (32) indicates that light is detected by the light detector (30) and thereby indicates a first column or a first row that corresponds to the first position.

**8.** The system (10) in accordance with any of the claims 1-7, said controller (22) comprising:
at least a first output (40) configured to provide a first image signal (20A) for the first projector (12A);
at least a second output (42) configured to provide a second image signal (20B) for the second projector (12B);
an input (44) configured to receive a light signal (32) from the light detector (30); and
a processor (46) configured to analyze the light signal (32), and determine the first image signal (20A) and the second image signal (20B) based on the light signal (32) so a seamless image is projected on the display (16).

**9.** The system (10) in accordance with any of the preceding claims, where said projectors may be equipped with means (actors) to alter the size and direction of the image projected by adjusting a lens arrangement and or adjusting a projection direction of the projector.

**10.** A method (500) to align a display system (10) for displaying a seamless mosaic of a plurality of images projected onto a display surface (14) of a display (16) by a plurality of projectors (12), said system (10) comprising the display surface (14), at least a first projector (12A) configured to project onto a border portion (28) of the display surface (14), at least a second projector (12B) configured to project onto the border portion (28), and a light detector (30) attached to the display (16) and configured to detect light at a location within the border portion (28), said method (500) comprising the steps of:
projecting (510) a first image from an at least first projector (12A) onto the border portion (28);
receiving (520) a first light signal (32) from the light sensor in response to projecting the first image;
determining (530) a first position within the first image corresponding to the location of the light detector (30);
projecting (540) a second image from an at least second projector (12B) onto the border portion (28);
receiving (550) a second light signal (32) from the light sensor in response to projecting the second image;
determining (560) a second position within the second image corresponding to the location of the light detector (30); and
adjusting (570) the first image and the second image so a seamless mosaic is projected on the display (16).

**11.** The method (500) in accordance with claim 10, wherein the step (570) of adjusting includes adjusting the first image and the second image so they do not overlap.

**12.** The method (500) in accordance with claim 10, wherein the step (570) of adjusting includes deactivating pixels in the at least first projector (12A) and the at least second projector (12B).

**12.** The method (500) in accordance with claim 10, wherein the step (510) of projecting a first image includes sequentially activating columns of pixels or rows of pixels.

**13.** The method (500) in accordance with claim 10, wherein the step (530) of determining a first position includes sequentially activating columns of pixels or rows of pixels until the light signal (32) indicates that light is detected by the light detector (30), thereby indicating that a particular column or a particular row corresponds to the first position.
